# EUROPEAN PATENT SPECIFICATION

(11) **EP 1 768 335 B1**
(45) Date of publication and mention of the grant of the patent: **11.09.2013**
(21) Application number: 05772889.1
(22) Date of filing: 13.07.2005
(51) Int. Cl.: H04L 29/00, H04L 12/715, H04L 12/723, H04L 12/46

(54) **A VIRTUAL PRIVATE NETWORK AND THE METHOD FOR THE CONTROL AND TRANSMIT OF THE ROUTE**
VIRTUELLES PRIVATES NETZWERK UND VERFAHREN ZUR ROUTENSTEUERUNG UND -SENDUNG
RESEAU PRIVE VIRTUEL ET PROCEDE DE COMMANDE ET DE TRANSMISSION D'ACHEMINEMENT

(30) Priority: 13.07.2004 CN 200410071740
(43) Date of publication of application: 28.03.2007
(73) Proprietor: Huawei Technologies Co., Ltd., Longgang District, Shenzhen Guangdong 518129 (CN)
(72) Inventor: DONG, Weisi, Huawei Administration Building, 518129 Shenzhen Guangdong (CN)
(74) Representative: Körber, Martin Hans
(86) International application number: PCT/CN2005/001035
(87) International publication number: WO 2006/005260

(56) References cited:
- EP-A1- 1 392 033
- WO-A2-02/099571
- CN-A- 1 455 560
- LI BIN DONG WEISI HUAWEI TECHNOLOGIES CHEN YUNQING CHINA TELECOM BEIJING RESEARCH INSTITUTE LI DEFENG HUAWEI TECHNOLOGIES: "Hierarchy of Provider Edge Device in BGP/MPLS VPN <draft-libin-hierarchy-pe-bgp-mpls-vpn-02. txt>; draft-libin-hierarchy-pe-bgp-mpls-vpn-02.t xt" IETF STANDARD-WORKING-DRAFT, INTERNET ENGINEERING TASK FORCE, IETF, CH, no. 2, 27 May 2003 (2003-05-27), XP015004201 ISSN: 0000-0004
- SEMERIA C: "RFC 2547bis: BGP/MPLS VPN Fundamentals" WHITEPAPER JUNIPER NETWORKS, XX, XX, 1 January 2001 (2001-01-01), pages 1-38, XP002994705

## Description

### Field of the Technology

The present invention relates to Virtual Private Network (VPN) techniques, and more particularly to a Multi-protocol Label Switching-based VPN (MPLS VPN) and a method for controlling and forwarding route thereof.

### Background of the Invention

Border Gateway Protocol (BGP)/MPLS VPN was proposed in 1999 and has become a Request for Comments (RFC) standard 2547.

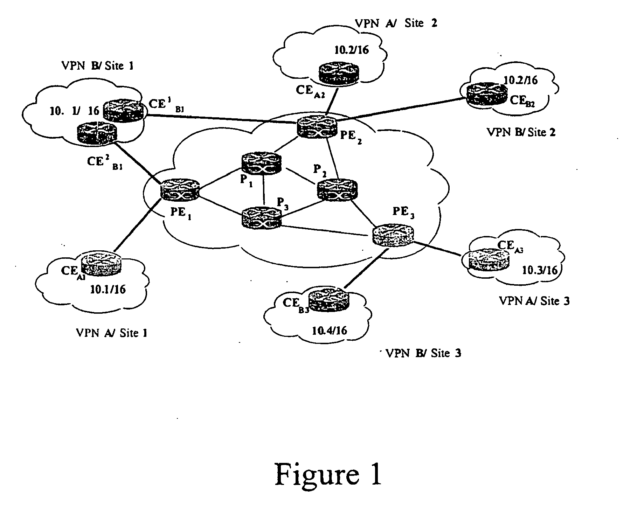

As shown in Figure 1, there are three components in a BGP/MPLS VPN model, i.e., a Customer Edge (CE) device, a Provider Edge (PE) router and a Provider (P) router. The CE device is a component of a customer's network having an interface directly connected with a provider's network. Generally, the CE device is a router and does not sense the existence of a VPN. The PE router is an edge device of the provider's network directly connected with a CE. In an MPLS network, all processing on a VPN is performed in the PE router. The P router is located in the provider's network. It is a Provider's router, not directly connected with the CE router, and needs to have MPLS basic signalling and forwarding abilities.

The division of the CE and the PE is mainly based on the domains of a provider and a customer. The CE and the PE are borders of the administration ranges of the provider and the customer. Routing information can be exchanged between the CE and the PE through Extemal-BGP (E-BGP), or Interior Gateway Protocol (IGP), or static routing. The CE needs not to support the MPLS or have sense of the existence of the VPN. Inside the VPN, Multi-protocol Border Gateway Protocol (MBGP) is used to exchange routing information between PEs.

The BGP/MPLS VPN defined in the RFC2547 is hereinafter described in detail.

### 1. VPN Routing/Forwarding (VRF) instance:

A BGP/MPLS VPN consists of multiple customer sites. Multiple VRFs are saved in a PE and each VRF corresponds to a site. The content of the VRF mainly includes: an Internet Protocol (IP) routing table, a label forwarding table and a series of interface information and administration information which use the label forwarding table.

The site and the VPN are not uniquely corresponding to each other. A site may belong to multiple VPNs at the same time. In practice, each site is associated with a single VRF. The VRF of a site in the VPN integrates relationships of the VPN members and routing rules of the site. Packet forwarding information is saved in the IP routing table and the label forwarding table of each VRF. A set of independent routing tables and label forwarding tables is maintained for each VRF. Therefore, data are prevented from leaking out of the VPN and data outside the VPN are prevented from entering the VPN as well.

### 2. VPN-Internet Protocol version 4 (IPv4) address family:

In the BGP/MPLS VPN, the BGP is used to distribute VPN routes between PEs, and a new VPN-IPv4 address family is adopted to distribute routes in the VPN. A VPN-IPv4 address is a 12-byte quantity, beginning with an 8-byte Route Distinguisher (RD) and ending with a 4-byte IPv4 address. Each provider may assign RDs independently, but their dedicated Autonomous System (AS) numbers need to be a part of the RDs in order to guarantee each RD to be globally unique. A VPN-IPv4 address whose RD is 0 has the same meaning with a globally unique IPv4 address. Thus, even if 4-byte IPv4 address is overlapped, the VPN-IPv4 address can still be globally unique. In addition, the route received by the PE from the CE is an IPv4 route, therefore, the IPv4 route is added in the VRF routing table with an additional RD. In practical applications, all the routes from a same site can be added with a same RD.

### 3. VPN-Target attribute:

In the RFC2547, the VPN-Target attribute finally determines the VPN partition in the whole network. Since there is no definite VPN identifier in a MPLS/BGP VPN, the determination that routes from which sites can be received and the route of this site can be received by which sites mainly depends on the VPN-Target attribute. There are two VPN-Target attribute sets in a PE router. One is added to the routes received from a certain site, referred to as Export VPN-Targets, the other is used to determine which routes can be placed in the routing table of the site, referred to as Import VPN-Targets. The relationships between the VPN members can be acquired by matching the Route Target attribute carried in the route. Furthermore, the matching of the Route Target attribute can also be used to filter route information received by the PE, i.e., when route information enters the PE, if there exists a same item between the Export Route Targets and the Import Route Targets, the route is accepted; if there is no same item between the Export Route Targets and the Import Route Targets, the route is rejected.

### 4. VPN packet Forwarding:

Two layers of labels are adopted to forward a VPN packet in the BGP/MPLS VPN. The first layer label, i.e., the outer layer label, is exchanged within the provider's network, representing a Label Switched Path (LSP) from a PE to a peer PE. Using this label, a VPN packet can reach the peer PE along the LSP corresponding to the label. The second layer label, i.e., the inner layer label, is used when the packet arrives at a CE from the peer PE, representing the target site of the packet, or more specifically, the target CE of the packet. Thus, an interface can be found according to the inner layer label to forward the packet to the customer. If the source site and the target site of a packet are connected to the same PE, the problem how to reach the peer PE will not exist and the only problem to be solved is how to reach the CE connected with the target site.

### 5. Route distribution by the BGP

In the RFC2547, route information between a CE and a PE is transmitted by the IGP or the EBGP. The PE acquires the routing table of the VPN, and stores it in an independent VRF. The PEs guarantee connectivity with each other in the provider's network by the IGP, transmit composing information and routes of the VPN and update the VRFs of themselves by Interior BGP (IBGP). Then, each PE updates the routing table of the CE directly connected with it by route exchange, thereby completing the route exchanges between the CEs.

The BGP communication is performed on two levels: the IBGP and the EBGP. A PE-PE session is an IBGP session, and a PE-CE session is an EBGP session.

The BGP implements the VPN composing information and route transmissions between PEs by Multi-protocol extensions BGP (MBGP). The MBGP is backward compatible, and supports not only the IPv4 address family but also other address families, such as, the VPN-IPv4 address family. Route targets carried by the MBGP guarantee that the route of a specific VPN can be known only by members in this VPN, thus it is possible for the BGP/MPLS VPN members to communicate between themselves.

In the RFC2547, all the PEs are located on the same layer, and are components of the provider's network. All the PEs directly exchange VPN routes with each other, and all the PEs are in the same network, which can be viewed as a public network. Different VPNs are configured on each PE according to customer requirements, and the VPN are divided by the provider through changing the configuration of the VPN according to the customer requirements. All these are administrated by the provider. The provider provides a link or an interface to the customer. Once the customer accesses through the link, the VPN he/she accesses is determined, i.e., all the customers accessing through this interface belong to the same VPN. If there is a VPN division requirement among the customers accessing through the link, it is necessary for the provider to directly configure the internal VPN of the customer on the PE device.

Thus, a customer exists in the PE of a provider as multiple small VPNs instead of an independent VPN. In addition, the customer cannot independently adjust the relationships among his/her multiple VPNs, and all these must be performed by the provider. And since the VPNs of the customer are administrated by the provider, this will bring out security problems in the customer's network. For example, incorrect configurations to the VPN of the customer by the provider will result in incorrect traffic forwarding among the multiple internal networks of the customer.

Furthermore, the number of the VPNs on a PE increases along with the division of the internal VPNs of a customer, which results in increasing load of the PE of the provider, and therefore, results in increasing operation cost of the provider. On the other hand, each internal VPN of the customer divided on the PE needs an independent access link or sub-link, which results in increasing expense for the customer to use the VPN of the provider.

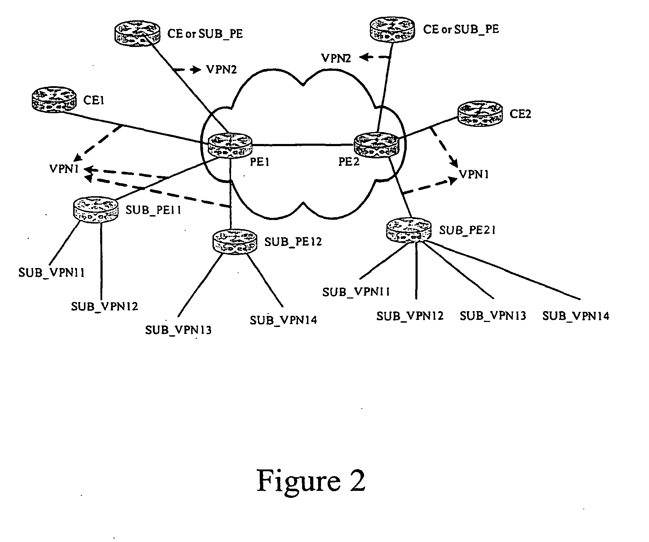

European Patent NO. 1392033 A1 discloses a 3-layer VPN which comprises P devices, PE devices and Hierarchy of PE, HoPE, devices in the backbone network. The HoPE devices comprise understratum PEs (UPEs), zero or more middle-level PEs (MPEs) and superior PEs (SPEs). As illustrates in figure 2, the HoPE devices are located in the backbone network.

### Summary of the Invention

The object problem is solved by the VPN claim according to claim 1 and its dependent claims and by the method claim according to claim 5 and its dependent claims.

The present invention provides a Virtual Private Network (VPN) and a method for controlling and forwarding route of the VPN, so that a provider needs not to interfere in the administration of the VPN of a customer and the customer can divide and adjust the VPN independently. Thus, the security of the traffic among the VPNs of the customer is improved. On the other hand, load of Provider Edge (PE) devices of the provider is reduced, and expense for the customer to use the VPN of the provider is decreased.

It can be seen from the above that, in the VPN and the method for controlling and forwarding route of the VPN, all the SUB_VPNs belonging to the same customer are configured as one VPN under the PE of the provider. Meanwhile, the SUB_PE is configured in the CE corresponding to the PE of the provider, thus the customer can configure his/her SUB_VPN under the SUB_PE. The private network routes are transmitted between SUB_PEs by the MBGP.

A VPN customer can build his/her own SUB_VPN independently on demand. Furthermore, the VPN customer has a complete administration on his/her own

SUB_VPN. It should be noted that the SUB_VPN is invisible to the provider that the VPN customer attached. Accordingly, the SUB_VPN of the customer is not operated and administrated by the provider any longer, thus the security problem of the SUB_VPN of the customer can be avoided, i.e., incorrect configurations on the VPN of the customer by the provider are avoided. Therefore, incorrect traffic forwarding among the SUB_VPNs of the customer is radically prevented.

Furthermore, when a VPN customer requires multiple SUB_VPNs, the provider's network will not be affected, and the provider needs not to maintain these SUB_VPNs on the PE. Therefore, the load of the PE is effectively decreased and the expense for the customer to use the VPN of the provider is reduced.

### Brief Description of the Drawings

Figure 1 is a diagram illustrating an MPLS L3 VPN model defined in RFC2547;
Figure 2 is a schematic diagram illustrating a nested network structure of an MPLS VPN according to an embodiment of the present invention;
Figure 3 is a flowchart illustrating a route forwarding process in a nested MPLS VPN according to an embodiment of the present invention;
Figure 4 is a schematic diagram illustrating a route forwarding path in a multiple layer nested MPLS VPN according to an embodiment of the present invention.

### Brief Description of the Invention

A SUB_PE is configured under the PE of the provider, used for building a SUB_VPN of a customer. In the SUB_VPN under the PE, the MBGP is adopted to transmit route of the customer's private network, i.e., the SUB_VPN.

When a PE receives a route of a VPN-IPv4 address family through an interface of a SUB_VPN, the PE adds the export target attribute of the SUB_VPN to the route. The PE continues the matching process and forwarding the route to other VPNs on the PE according to the route. In addition, the PE transforms the route to an IPv4 route and forwards the IPv4 route to other CEs connected with the VPN.

When a PE receives a VPN route transmitted by the MBGP, if there is an MBGP address family connection in the SUB_VPN of the PE, the PE continues to forward the route to the BGP connection of the MBGP address family in its SUB_VPN in the IPv4 format without changing the export route target attribute of the route.

The network architecture of a VPN according to an embodiment of the present invention is shown in Figure 2.

For a VPN customer, e.g., VPN1, there are 4 SUB_VPNs inside the VPN1, they are SUB_VPN11, SUB_VPN12, SUB_VPN13 and SUB_VPN14 respectively.

The VPN1 is configured on PE1 and PE2 respectively, which are two PEs of the provider. On the PE1, among the SUB_VPNs, the SUB_VPN11 and the SUB_VPN12 are connected with the PE1 through the SUB_PE11, the SUB_VPN13 and the SUB_VPN14 are connected with the PE1 through the SUB_PE12. On the PE2, among the SLTB_VPNs, the SUB_VPN11, SUB_VPN12, SUB_VPN13 and SUB_VPN14 are connected with the PE2 respectively. Wherein, the SUB_PE refers to a PE in the private network of the customer. Thus, the SUB_VPNs of the customer are connected to the VPN1 of the provider through a link.

Similarly, a VPN2 can be configured for another VPN customer and the VPN2 is connected to another interface of the PE1 and the PE2 respectively.

An example of the configuration of the VPN1 and the VPN2 on the PE1 and the PE2 is as follows respectively:
VPN1: VPN import/export 100:1
VPN2: VPN import/export 100:2
wherein, both of them follow the format of:
   SUB_VPN name: VPN import/export SUB_VPN identifier
   wherein, 100 is the AS number, 1 and 2 are arbitrarily defined values corresponding to the VPN1 and the VPN2 respectively.

Those skilled in the art should know that the specific configuration as an example herein is only one of the possible configurations, and its format and parameters can be changed as long as the configuration of the two independent VPNs can be accomplished.

Thus, the two VPNs, i.e., the VPN1 and the VPN2, are respectively formed on the PE1 and the PE2.

Besides the SUB_PE interface, an interface connected with an ordinary CE also can be bound with the PE, as shown in Figure 2. Three interfaces are bound in the VPN1 of the PE1, besides the two interfaces connected with the SUB_PE11 and the SUB_PE12, there is another interface connected with the CE1. In the VPN1 of the PE2, besides the interface connected with the SUB_PE21, there is another interface connected with the CE2. Actually, the SUB_PE is implemented by reconstructing the original CE. Those skilled in the art should know that, a router generally has multiple interfaces; it can perform the function of a CE by configuring the interface corresponding to the PE of the provider following an CE manner. And other interfaces of the router can also be configured following a PE manner, so as to make the router to be a PE in a private network of a customer, i.e., a SUB_PE.

After the configuration on the PE is completed, a SUB_VPN is further configured on a SUB_PE connected with the PE according to customer requirements. For example, four SUB_VPNs, i.e., SUB_VPN11, SUB_VPN12, SUB_VPN13 and SUB_VPN14, are respectively configured on the SUB_PE11 and the SUB_PE12, which are connected with the PE1. The detailed configuration is as follows.
SUB_VPN11: VPN import/export 1000:1
SUB_VPN12: VPN import/export 1000:2
SUB_VPN13: VPN import/export 1000:3
SUB_VPN14: VPN import/export 1000:4

Wherein, 1000 is the AS number; 1, 2, 3 and 4 are arbitrarily defined values corresponding to the SUB_VPN11, SUB_VPNI2, SUB_VPN13 and SUB_VPN14, respectively.

Similar configuration can also be set on the SUB_PE2 of the PE2. Thus, four SUB_VPNs, i.e., the SUB_VPN11, SUB_VPN12, SUB_VPN13 and SUB_VPN14, are formed as the private networks of the customer.

An ordinary CE can also be connected with the VPN1 of the PE1, as shown in Figure 2. Since the SUB_PE is connected to the VPN acting as a PE, the MBGP is needed between the SUB_PE and the PE. And the SUB_PE is equivalent to a CE of the PE. Therefore, running the MBGP herein corresponds to running it in a private network.

Those skilled in the art should know that, similar to a provider's VPN, a corresponding SUB_CE needs to be configured in each SUB_VPN. The relationship between the SUB_PE and the SUB_CE is similar to that between the PE and the CE in the related art. To stress the emphasis, the SUB_CE is not shown in Figure 2.

As can be seen from the above description, a VPN of a nested architecture is provided, which can be divided into two layers.

The first layer is a provider layer. In the PE of the provider, all the SUB_VPNs belonging to the same customer is configured as one VPN. For example, the SUB_VPN11, SUB_VPN12, SUB_VPN13 and SUB_VPN14, which belong to the same customer, are configured as the VPN1. Thus, the provider only needs to administrate one VPN instead of all the SUB_VPNs of the customer. Therefore, the security of the SUB_VPNs of the customer can be enhanced; the load of the PE of the provider can be decreased effectively; and the expense for the customer to use the VPN of the provider is also reduced.

The second layer is a customer layer. For a customer, the provider provides a basic transmission network which implements communication among sites located in different regions of the customer. But in the sites, the configurations of the SUB_VPNs are implemented and administrated by the customer his/her own. What the customer needs to do is to configure the SUB_VPN in multiple inter-connected sites on demands and to administrate the SUB_VPNs. Thus, the incorrect traffic forwarding among the SUB_VPNs of the customer brought out by the incorrect configuration by the provider can be avoided.

The process of controlling and forwarding route in a VPN of a nested architecture according to an embodiment of the present invention is described in detail hereinafter.

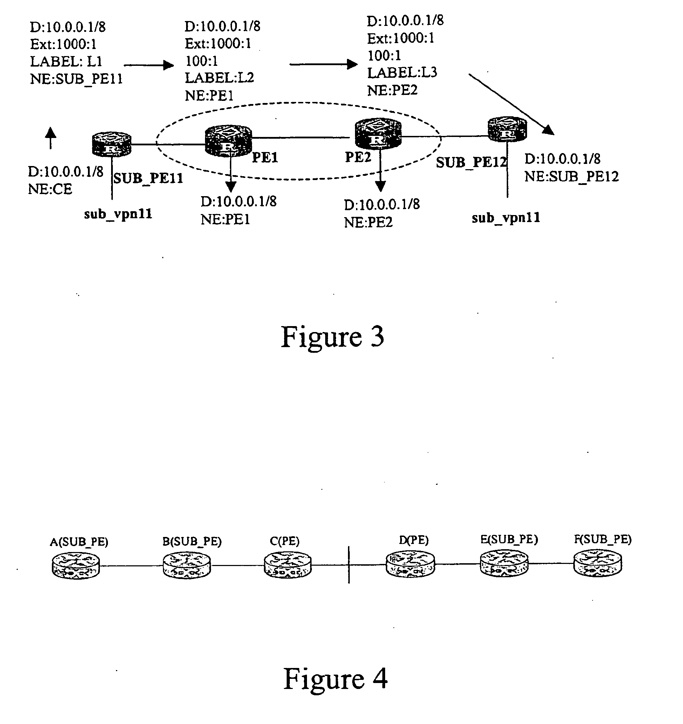

As shown in Figure 3, take the SUB_VPN11 as an example.

First, when a route 10.0.0.1/8 of the SUB_VPN11 is sent from the SUB_PE11, it carries the export target attribute 1000:1 of the SUB_VPN11 and is transmitted to the PE1 by the MBGP.

Next, the PE1 receives the route on a private network interface in the VPN1 by the MBGP, then performs local VPN matching of the route. If there are other private network interfaces in the VPN1, notify the other private network interfaces in the VPN1 of the route.

Specifically, the step of performing the local VPN matching includes: if there is another VPN matching the SUB_VPN11, send the route to the matching VPN. For example, if the SUB_VPN11 is also configured on the SUB_PE12, the PE1 sends the route to the SUB_PE12 by the MBGP. If there is also an ordinary CE connection in the VPN1, transform the route into an ordinary IPv4 route and send the IPv4 route to the CE. For example, as shown in Figure 2, if there is a site in the VPN1 connected to the PE1 through the CE1, the PE1 transforms the route into an ordinary IPv4 route and sends it to the CE1.

And then, add an export target attribute 100:1 of the VPN1 to the route and send it to the PE2.

The route includes export target attributes of two layers of VPNs after this step. As shown in Figure 3, the outer layer is the export target attribute 100:1 of the VPN of the provider layer, while the inner layer is the export target attribute 1000:1 of the SUB_VPN1 of the customer layer.

When the route is transmitted to the PE2, the PE2 compares the export target attribute 100:1 1 in the route with the import target attributes of the VPN1 in the PE2. If an import target attribute of local VPN1 matching the export target attribute 100:1 is found, it indicates that the route belongs to the VPN1 and accepts the route; otherwise, reject the route.

After the PE2 determines that the route belongs to the VPN1, it judges whether there is an MBGP connection in the VPN1 connected with the PE2. If there is an MBGP connection in the VPN1 connected with the PE2, that the PE2 determines there is a VPN, and transmits the route to the PE in the SUB_VPN belonging to the PE2, i.e., the SUB_PE21 in Figure 3. If there is no MBGP connection in the VPN1 connected with the PE2, the PE2 determines that there is no VPN, and ends the procedure. If there is a CE directly connected with the PE2, directly transform the route into an ordinary IPv4 route and send it to the CE, e.g., the CE2 in Figure 3.

After the SUB_PE21 determines that the route belongs to the local SUB_VPN11, it compares the inner layer export target attribute 1000:1 of the route with the import target attribute of local SUB_VPNs, if it is found that the import target attribute of local SUB_VPN11 matches the inner layer export target attribute 1000:1 of the route, it is determined that the route belongs to the local SUB_VPN11, accept the route, otherwise, reject the route.

After the SUB_PE21 confirms that the route belongs to the local SUB_VPN11, the SUB_VPN1 accepts the route, and sends the route to the SUB_CE corresponding to the SUB_VPN11.

Additionally, the step of the CE processing the received route is completely the same as that in the related art, which will not be repeated herein.

The packet forwarding process in the embodiments of the present invention is basically the same with that in an ordinary VPN topology. The difference is that each upper layer PE, i.e., the PE1 and the PE2 in Figure 2, performs a substitution on a private network label after receiving a packet.

It should be noted that, although the VPNs in the above embodiments have only one layer of nested architecture, a multiple-layer nested architecture is also possible. At this time, after each upper layer PE receives a route from a lower layer SUB_PE, it needs to add a corresponding export target attribute to the route, as shown in Figure 4, which is a schematic diagram illustrating a network structure with multiple layers of nested VPNs according to an embodiment of the present invention. The route of the lowest layer VPN is sent from router A along the path A-B-C-D-E-F. During the forwarding of the route, the router A, B, C will respectively add an export target attribute of its own to the route. When the route reaches the router D, no export target attribute will be added any more, the router D, E and F respectively compare a list of export target attributes with the import target attribute of its own to determine whether to accept the route.

The above descriptions are only the preferred embodiments of the present invention and are not used to confine the protection scope of the present invention.

## Claims

1. A BGP/MPLS Virtual Private Network, VPN, comprising:
a provider's network and a customer's network; **characterized in**,
a Sub-Provider Edge, SUB_PE, is configured in the customer's network, the SUB_PE is a router of which interfaces are configured following a Provider Edge, PE, manner, to make the router to be a PE in the customer's network, and the SUB-PE is connected with a PE in the provider's network;
at least one VPN, SUB_VPN, belonging to the same customer is configured under the SUB_PE, and the SUB_VPN accesses the provider's network via the SUB_PE, wherein all the SUB_VPNs belonging to the same customer are configured as one VPN.

2. The VPN according to Claim 1, wherein, the VPN comprises at least one lower layer SUB_PE, which is connected to the PE in the provider's network through the SUB_PE in the SUB_VPN;
at least one lower layer SUB_VPN is configured under the lower layer SUB_PE.

3. The VPN according to Claim 1, wherein, private network routes are transmitted between the SUB_PE and the PE in the provider's network connected with the SUB_PE by Multi-protocol Border Gateway Protocol, MBGP.

4. The VPN according to Claim 1, wherein, the SUB_VPN is configured under the SUB_PE in the following format:
SUB_VPN name: VPN import/export SUB_VPN identifier.

5. A method for controlling and forwarding route of a BGP/MPLS Virtual Private Network, VPN, which comprises a provider's network and a customer's network, comprising:
configuring a Sub-Provider Edge, SUB_PE, in the customer's network, connected with a PE in the provider's network, wherein the SUB_PE is a router of which interfaces are configured following a Provider Edge, PE, manner, to make the router to be a PE in the customer's network,;
configuring at least one VPN, SUB_VPN, belonging to the same customer under the SUB_PE, and the SUB_VPN accessing the provider's network through the SUB_PE;
adding, by a SUB_PE, an export target attribute of a SUB_VPN to a route of the SUB_VPN, and transmitting the route to the PE in the provider's network by Multi-protocol Border Gateway Protocol, MBGP;
adding, by the PE in the provider's network, an export target attribute of the SUB_VPN to the received route, and forwarding the route to a peer PE in the VPN through the provider's network;
after receiving the route, comparing, by the peer PE, the export target attribute in the route with an import target attribute saved by the peer PE, if a matching VPN is found, accepting the route and forwarding the route to a SUB_VPN connected with the peer PE; otherwise, rejecting the route;
after receiving the route, comparing, by a SUB_PE in the SUB_VPN connected with the peer PE, the export target attribute of the SUB_VPN connected with the PE in the provider's network in the route with an import target attribute of the SUB_VPN connected with the peer PE saved by the SUB_PE in the SUB_VPN connected with the peer PE, if they match, accepting the route; otherwise, rejecting the route.

6. The method according to Claim 5, wherein, at least one lower layer SUB_PE is configured, connected with the PE through the SUB_PE in the SUB_VPN; and
at least one lower layer SUB_VPN is configured under the lower layer SUB_PE; the step of transmitting the route to the PE by the SUB_PE comprises:
forwarding, by the lower layer SUB_PE, the route layer by layer through the SUB_PE; and adding export target attributes of the SUB_VPNs respectively corresponding to the lower layer SUB_PE and the SUB_PE to the route when forwarding the route;
after the step of forwarding the route to the SUB_VPN connected with the peer PE by the peer PE, the method further comprises:
after receiving the route, comparing, by the SUB_PE in the SUB_VPN connected with the peer PE, the current layer export target attribute of the SUB_VPN in the route with the import target attribute of the SUB_VPN saved by the SUB_PE in the SUB_VPN connected with the peer PE, if a matching SUB_VPN is found, accepting the route and forwarding the route to a lower layer SUB_VPN connected with the SUB_PE in the SUB_VPN connected with the peer PE; otherwise, rejecting the route.

7. The method according to Claim 5, further comprising:
after receiving a route by an SUB_PE or a PE, forwarding the route to other interfaces of the SUB_VPN or the VPN to which the SUB_PE or the PE belongs.

8. The method according to Claim 6, further comprising:
after receiving a route by an SUB_PE or a PE, forwarding the route to other interfaces of the SUB_VPN or the VPN to which the SUB_PE or the PE belongs.

9. The method according to Claim 5, further comprising:
before the step of forwarding the route to an SUB_VPN connected with the peer PE by the peer PE, judging, by the peer PE, whether there is a router running the MBGP among the routers in the customer's network connected with the peer PE, if there is such a router, it indicating that there is an SUB_VPN, continuing with the following operations; otherwise, it indicating that there is no SUB_VPN, ending the procedure.

## Patentansprüche

1. Virtuelles privates Netzwerk, VPN, mit BGP/MPLS, umfassend:
ein Netzwerk eines Providers und ein Netzwerk eines Kunden; **dadurch gekennzeichnet, dass**
ein Sub-Provider-Edge, SUB_PE, in dem Netzwerk des Kunden konfiguriert ist,
wobei der SUB_PE ein Router ist, dessen Schnittstellen unter Befolgung einer Provider-Edge- bzw. PE-Weise konfiguriert sind, um zu bewirken, dass der Router ein PE in dem Netzwerk des Kunden ist, und der SUB_PE mit einem PE in dem Netzwerk des Providers verbunden ist;
mindestens ein VPN, SUB_VPN, das zu demselben Kunden gehört, unter dem SUB_PE konfiguriert ist und das SUB_VPN über den SUB_PE auf das Netzwerk des Providers zugreift, wobei alle die SUB_VPNs, die zu demselben Kunden gehören,
als ein VPN konfiguriert sind.

2. VPN nach Anspruch 1, wobei das VPN mindestens einen SUB_PE der unteren Schichten umfasst, der durch den SUB_PE in dem SUB_VPN mit dem PE in dem Netzwerk des Providers verbunden ist;
wobei mindestens ein SUB_VPN der unteren Schichten unter dem SUB_PE der unteren Schichten konfiguriert ist.

3. VPN nach Anspruch 1, wobei Routen des privaten Netzwerks zwischen dem SUB_PE und dem PE in dem Netzwerk des Providers, der mit dem SUB_PE verbunden ist, durch das Mehrfach-Protokoll-Border-Gateway-Protokoll, MBGP, übertragen werden.

4. VPN nach Anspruch 1, wobei das SUB_VPN unter dem SUB_PE in dem folgenden Format konfiguriert ist:
SUB_VPN-Name: VPN-Import/Export-SUB_VPN-Kennzeichnung.

5. Verfahren zum Steuern und Weiterleiten einer Route eines virtuellen privaten Netzwerks, VPN, mit BGP/MPLS, das ein Netzwerk eines Providers und ein Netzwerk eines Kunden umfasst, umfassend:
Konfigurieren eines Sub-Provider-Edge, SUB_PE, in dem Netzwerk des Kunden, der mit einem PE in dem Netzwerk des Providers verbunden ist, wobei der SUB_PE ein Router ist, dessen Schnittstellen unter Befolgung einer Provider-Edge- bzw. PE-Weise konfiguriert sind, um zu bewirken, dass der Router ein PE in dem Netzwerk des Kunden ist;
Konfigurieren mindestens eines VPN, SUB_VPN, das zu demselben Kunden gehört,
unter dem SUB_PE, und wobei das SUB_VPN durch den SUB_PE auf das Netzwerk des Providers zugreift;
Hinzufügen, durch einen SUB_PE, eines Exportziel-Attributs eines SUB_VPN zu einer Route des SUB_VPN und Übertragen der Route durch das Mehrfach-Protokoll-Border-Gateway-Protokoll, MBGP, an den PE in dem Netzwerk des Providers;
Hinzufügen, durch den PE in dem Netzwerk des Providers, eines Exportziel-Attributs des SUB_VPN zu der empfangenen Route und Weiterleiten der Route durch das Netzwerk des Providers an einen Peer-PE in dem VPN;
nach Empfangen der Route, Vergleichen, durch den Peer-PE, des Exportziel-Attributs in der Route mit einem von dem Peer-PE gespeicherten Importziel-Attribut,
wenn ein übereinstimmendes VPN gefunden wird, Annehmen der Route und
Weiterleiten der Route zu einem mit dem Peer-PE verbundenen SUB_VPN;
anderenfalls Zurückweisen der Route;
nach Empfangen der Route, Vergleichen, durch einen SUB_PE in dem mit dem Peer-PE verbundenen SUB_VPN, des Exportziel-Attributs des mit dem PE in dem Netzwerk des Providers verbundenen SUB_VPN in der Route mit einem Importziel-Attribut des mit dem Peer-PE verbundenen SUB_VPN, das von dem SUB_PE in dem mit dem Peer-PE verbundenen SUB_VPN gespeichert wurde, wenn sie übereinstimmen, Annehmen der Route; anderenfalls Zurückweisen der Route.

6. Verfahren nach Anspruch 5, wobei mindestens ein SUB_PE der unteren Schichten konfiguriert ist, mit dem PE durch den SUB_PE in dem SUB_VPN verbunden ist;
und
mindestens ein SUB_VPN der unteren Schichten unter dem SUB_PE der unteren Schichten konfiguriert ist;
der Schritt des Übertragens der Route durch den SUB_PE an den PE Folgendes umfasst:
Weiterleiten, durch den SUB_PE der unteren Schichten, der Route Schicht um Schicht durch den SUB_PE; und Hinzufügen von Exportziel-Attributen der SUB_VPNs, die jeweils mit dem SUB_PE der unteren Schichten und dem SUB_PE korrespondieren, zu der Route, wenn die Route weitergeleitet wird;
wobei das Verfahren nach dem Schritt des Weiterleitens der Route an das mit dem Peer-PE verbundene SUB_VPN durch den Peer-PE ferner Folgendes umfasst:
nach Empfangen der Route, Vergleichen, durch den SUB_PE in dem mit dem Peer-PE verbundenen SUB_VPN, des Exportziel-Attributs der gegenwärtigen Schicht des SUB_VPN in der Route mit dem Importziel-Attribut des SUB_VPN, das durch den SUB_PE in dem mit dem Peer-PE verbundenen SUB_VPN gespeichert wurde, wenn ein übereinstimmendes SUB_VPN gefunden wird, Annehmen der Route und Weiterleiten der Route an ein SUB_VPN der unteren Schichten, das mit dem SUB_PE in dem mit dem Peer-PE verbundenen SUB_VPN verbunden ist;
anderenfalls Zurückweisen der Route.

7. Verfahren nach Anspruch 5, ferner umfassend:
nach Empfangen einer Route durch einen SUB_PE oder einen PE, Weiterleiten der Route an andere Schnittstellen des SUB_VPN oder des VPN, zu dem der SUB_PE oder der PE gehört.

8. Verfahren nach Anspruch 6, ferner umfassend:
nach Empfangen einer Route durch einen SUB_PE oder einen PE, Weiterleiten der Route an andere Schnittstellen des SUB_VPN oder des VPN, zu dem der SUB_PE oder der PE gehört.

9. Verfahren nach Anspruch 5, ferner umfassend:
vor dem Schritt des Weiterleitens der Route an ein mit dem Peer-PE verbundenes SUB_VPN durch den Peer-PE, Beurteilen, durch den Peer-PE, ob unter den Routern in dem Netzwerk des Kunden ein Router vorhanden ist, der das MBGP ausführt, der mit dem Peer-PE verbunden ist, wenn ein derartiger Router vorhanden ist, der anzeigt, dass ein SUB_VPN vorhanden ist, Fortfahren mit den folgenden Operationen; anderenfalls, wenn er anzeigt, dass kein SUB_VPN vorhanden ist, Beenden der Prozedur.

## Revendications

1. Réseau Privé Virtuel, VPN, BGP/MPLS, comprenant :
un réseau de fournisseur et un réseau de client ; **caractérisé en ce que** un Sous-Routeur Périphérique Fournisseur, SUB_PE, est configuré dans le réseau de client, le SUB_PE est un routeur dont les interfaces sont configurées à la manière d'un Routeur Périphérique Fournisseur, PE, pour faire en sorte que le routeur soit un PE dans le réseau de client, et le SUB_PE est connecté à un PE dans le réseau de fournisseur ;
au moins un VPN, SUB_VPN, appartenant au même client est configuré sous le SUB_PE, et le SUB_VPN sollicite le réseau de fournisseur par l'intermédiaire du SUB_PE, dans lequel tous les SUB_VPN appartenant au même client sont configurés en tant que VPN unique.

2. VPN selon la revendication 1, le VPN comprenant au moins un SUB_PE de couche inférieure, lequel est connecté au PE dans le réseau de fournisseur par le biais du SUB_PE dans le SUB_VPN ;
au moins un SUB_VPN de couche inférieure étant configuré sous le SUB_PE de couche inférieure.

3. VPN selon la revendication 1, dans lequel des routes de réseau privé sont transmises entre le SUB_PE et le PE dans le réseau de fournisseur connecté au SUB_PE par un Protocole de Passerelle de Frontière Multi-Protocole, MBGP.

4. VPN selon la revendication 1, dans lequel le SUB_VPN est configuré sous le SUB_PE dans le format suivant :
nom SUB_VPN : identifiant SUB_VPN importation/exportation VPN.

5. Procédé de commande et d'acheminement d'une route d'un Réseau Privé Virtuel, VPN, BGP/MPLS, lequel comprend un réseau de fournisseur et un réseau de client, comprenant :
la configuration d'un Sous-Routeur Périphérique Fournisseur, SUB_PE, dans le réseau de client, connecté à un PE dans le réseau de fournisseur, le SUB_PE étant un routeur dont les interfaces sont configurées à la manière d'un Routeur Périphérique Fournisseur, PE, pour faire en sorte que le routeur soit un PE dans le réseau de client ;
la configuration d'au moins un VPN, SUB_VPN, appartenant au même client sous le SUB_PE, et le SUB_VPN sollicitant le réseau de fournisseur par l'intermédiaire du SUB_PE ;
l'ajout, par un SUB_PE, d'un attribut de cible d'exportation d'un SUB_VPN à une route du SUB_VPN, et la transmission de la route jusqu'au PE dans le réseau de fournisseur selon le Protocole de Passerelle de Frontière Multi-Protocole, MBGP ;
l'ajout, par le PE dans le réseau de fournisseur, d'un attribut de cible d'exportation du SUB_VPN à la route reçue, et l'acheminement de la route jusqu'à un PE homologue dans le VPN par le biais du réseau de fournisseur ;
après la réception de la route, la comparaison, par le PE homologue, de l'attribut de cible d'exportation dans la route à un attribut de cible d'importation sauvegardé par le PE homologue, si un VPN correspondant est trouvé, l'acceptation de la route et
l'acheminement de la route jusqu'à un SUB_VPN connecté au PE homologue ; sinon,
le rejet de la route ;
après la réception de la route, la comparaison, par un SUB_PE dans le SUB_VPN connecté au PE homologue, de l'attribut de cible d'exportation du SUB_VPN connecté au PE dans le réseau de fournisseur dans la route à un attribut de cible d'importation du SUB_VPN connecté au PE homologue sauvegardé par le SUB_PE dans le SUB_VPN connecté au PE homologue, s'ils correspondent, l'acceptation de la route ; sinon, le rejet de la route.

6. Procédé selon la revendication 5, dans lequel au moins un SUB_PE de couche inférieure est configuré, connecté au PE par le biais du SUB_PE dans le SUB_VPN ;
et
au moins un SUB_VPN de couche inférieure est configuré sous le SUB_PE de couche inférieure ;
l'étape de transmission de la route jusqu'au PE par le SUB_PE comprend :
l'acheminement, par le SUB_PE de couche inférieure, de la route couche par couche par le biais du SUB_PE ; et l'ajout d'attributs de cible d'exportation des SUB_VPN correspondant respectivement au SUB_PE de couche inférieure et au SUB_PE à la route lors de l'acheminement de la route ;
le procédé comprenant en outre, après l'étape d'acheminement de la route jusqu'au SUB_VPN connecté au PE homologue par le PE homologue :
après la réception de la route, la comparaison, par le SUB_PE dans le SUB_VPN connecté au PE homologue, de l'attribut de cible d'exportation de la couche courante du SUB_VPN dans la route à l'attribut de cible d'importation du SUB_VPN sauvegardé par le SUB_PE dans le SUB_VPN connecté au PE homologue, si un SUB_VPN correspondant est trouvé, l'acceptation de la route et l'acheminement de la route jusqu'à un SUB_VPN de couche inférieure connecté au SUB_PE dans le SUB_VPN connecté au PE homologue ; sinon, le rejet de la route.

7. Procédé selon la revendication 5, comprenant en outre :
après la réception d'une route par un SUB_PE ou un PE, l'acheminement de la route jusqu'à d'autres interfaces du SUB_VPN ou du VPN auquel le SUB_PE ou le PE appartient.

8. Procédé selon la revendication 6, comprenant en outre :
après la réception d'une route par un SUB_PE ou un PE, l'acheminement de la route jusqu'à d'autres interfaces du SUB_VPN ou du VPN auquel le SUB_PE ou le PE appartient.

9. Procédé selon la revendication 5, comprenant en outre :
avant l'étape d'acheminement de la route jusqu'à un SUB_VPN connecté au PE homologue par le PE homologue, le jugement, par le PE homologue, qu'il existe ou
non un routeur exécutant le MBGP parmi les routeurs dans le réseau de client connecté au PE homologue, s'il existe un tel routeur, ce qui indique qu'il existe un SUB_VPN, la continuation des opérations suivantes ; si un tel routeur n'existe pas, ce qui indique qu'il n'existe pas de SUB_VPN, la clôture de la procédure.
